# EUROPÄISCHE PATENTSCHRIFT

(11) **EP 2 611 650 B1**
(45) Veröffentlichungstag und Bekanntmachung des Hinweises auf die Patenterteilung: **25.11.2015**
(21) Anmeldenummer: 11758385.6
(22) Anmeldetag: 02.09.2011
(51) Int. Cl.: B60N 2/20

(54) **FAHRZEUGSITZ MIT EINER MEMORY-VORRICHTUNG**
VEHICLE SEAT WITH A MEMORY DEVICE
SIÈGE DE VÉHICULE DOTÉ D'UN DISPOSITIF MÉMOIRE

(30) Priorität: 20.09.2010 DE 102010045738; 03.09.2010 DE 102010044340
(43) Veröffentlichungstag der Anmeldung: 10.07.2013
(73) Patentinhaber: Johnson Controls GmbH, 51399 Burscheid (DE)
(72) Erfinder: KIRUBAHARAN, Albert, Reginold, 51399 Burscheid (DE); MAI, Helmut, 40591 Düsseldorf (DE)
(74) Vertreter: Wolff, Felix
(86) Internationale Anmeldenummer: PCT/EP2011/004427
(87) Internationale Veröffentlichungsnummer: WO 2012/028327

(56) Entgegenhaltungen:
- DE-A1-102007 005 893
- US-A- 4 930 841

## Beschreibung

Die vorliegende Erfindung betrifft einen Fahrzeugsitz mit einem Sitzteil und einer Rückenlehne, die in der Gebrauchsstellung der Rückenlehne zu Komfortzwecken und für einem vereinfachten Zugang zu den rückwärtigen Sitzen relativ zu dem Sitzteil aus der Gebrauchs- in eine Easy-Entry-Stellung verdrehbar ist, die einen Verriegelungsmechanismus aufweist, der die Rückenlehne in der gewünschten Gebrauchsstellung verriegelt und die mit einer Vorrichtung versehen ist, die mit dem Verriegelungsmechanismus zusammenwirkt und die Rückenlehne aus der Easy-Entry-Stellung kommend automatisch in der ursprünglichen, gewünschten Gebrauchsstellung wieder verriegelt.

Ein derartiger Fahrzeugsitz ist beispielsweise aus der EP 0 867 329 B1 bekannt. Weiterer Stand der Technik ist die EP1 178 898 B1. Die dort beschriebenen Fahrzeugsitze sind jedoch vergleichsweise aufwendig gestaltet.

Es war deshalb die Aufgabe der vorliegenden Erfindung einen gattungsgemäßen Fahrzeugsitz zur Verfügung zu stellen, der ein geringeres Gewicht als die Fahrzeugsitze des Standes der Technik aufweist, der kompakt baut und bei dem die Memory-Vorrichtung innerhalb der beiden Seitenteile der Rückenlehne vorgesehen werden kann.

Gelöst wird die Aufgabe mit einem Fahrzeugsitz mit einem Sitzteil und einer Rückenlehne, die in der Gebrauchsstellung der Rückenlehne zu Komfortzwecken und für einen vereinfachten Zugang zu den rückwärtigen Sitzen relativ zu dem Sitzteil aus der Gebrauchsin eine Easy-Entry-Stellung verdrehbar ist, die einen Verriegelungsmechanismus aufweist, der die Rückenlehne in der gewünschten Gebrauchsstellung verriegelt und die mit einer Vorrichtung versehen ist, die mit dem Verriegelungsmechanismus zusammenwirkt und die Rückenlehne, aus der Easy-Entry-Stellung kommend, automatisch in der ursprünglichen, gewünschten Gebrauchsstellung verriegelt, wobei die Vorrichtung und die Verriegelungsmechanismus koaxial vorgesehen sind.

Die vorliegende Erfindung betrifft einen Fahrzeugsitz mit einem Sitzteil und einer Rückenlehne, die in der sogenannten Gebrauchsstellung, bei der die Rückenlehne im Wesentlichen vertikal angeordnet ist, so relativ zu dem Sitzteil verstellt werden kann, dass die Rückenlehne einen für den jeweiligen Sitzinsassen möglichst komfortablen Rückenwinkel einnimmt. Desweiteren ist die Rückenlehne aus der Gebrauchsstellung in eine sogenannte Easy-Entry-Stellung verdrehbar, bei der die Rückenlehne relativ zu dem Sitzteil soweit nach vorne gedreht wird, dass die Fahrzeugsitze, die sich hinter dem erfindungsgemäßen Fahrzeugsitz befinden, leichter zugänglich sind.

Erfindungsgemäß weist der Fahrzeugsitz einen Verriegelungsmechanismus auf, der die Rückenlehne in der jeweils gewünschten Gebrauchsstellung verriegelt. Um sicherzustellen, dass die Rückenlehne aus der Easy-Entry-Stellung kommend diese ursprüngliche, gewünschte Gebrauchsstellung wieder einnimmt, weist der erfindungsgemäße Fahrzeugsitz eine Vorrichtung auf, die mit dem Verriegelungssystem zusammenwirkt und die Rückenlehne mit dem Sitzteil verriegelt, sobald die Rückenlehne die ursprüngliche gewünschte Winkelstellung eingenommen hat. Derartige Vorrichtungen werden vom Fachmann als Memory-Vorrichtungen bezeichnet.

Erfindungsgemäß ist nun vorgesehen, dass die Memory-Vorrichtung und der Verriegelungsmechanismus koaxial vorgesehen sind, d.h. die Memory-Vorrichtung und der Verriegelungsmechanismus sind axial versetzt entlang einer Achse oder Welle angeordnet sind. Dadurch kann der erfindungsgemäße Fahrzeugsitz sehr kompakt aufgebaut werden und es ist möglich, die Memory-Vorrichtung innerhalb der Seitenteile des Fahrzeugsitzes vorzusehen.

Gemäß dem erfindungsgemäßen Gegenstand der vorliegenden Erfindung weist die Vorrichtung ein Mittel auf, das bei der Verstellung der Rückenlehne von der Gebrauchs- in die Easy-Entry-Stellung eine Rotationsbewegung in eine reine Translationsbewegung umwandelt. Durch diese Bewegungswandlung ist es möglich den erfindungsgemäßen Fahrzeugsitz sehr kompakt zu gestalten und im Wesentlichen mit Kunststoffteilen auszuführen.

Gemäß dem erfindungsgemäßen Gegenstand der vorliegenden Erfindung weist die Memory-Vorrichtung eine linear verstellbare Kupplung auf.

Die Memory-Vorrichtung weist ein Entriegelungsmittel, beispielsweise einen Entriegelungshebel, auf, der gedreht wird.

Dieses Entriegelungsmittel treibt die Kupplung der Memory-Vorrichtung an.

Weiterhin bringt das Entriegelungsmittel die Kupplung mit der Rückenlehne vor deren Verstellung in die Easy-Entry-Stellung, direkt oder indirekt, in einen form-, kraft- und/oder reibschlüssigen Kontakt. Dadurch wird die Drehbewegung der Rückenlehne auf die Kupplung übertragen, sodass diese sich ebenfalls dreht.

An der Kupplung ist ein Steuerelement, beispielsweise eine Nocke, vorgesehen, das ganz besonders bevorzugt eine Rastklinke steuert. Mit dieser Rastklinke kann vorzugsweise der Entriegelungshebel in einer gewünschten Stellung, insbesondere in seiner entriegelnden Stellung, verriegelt werden.

Vorzugweise treibt der Entriegelungshebel eine Übertragungswelle rotativ an, die den Verriegelungsmechanismus für die Easy-Entry-Verstellung der Rückenlehne entriegelt.

Weiterhin bevorzugt weist der erfindungsgemäße Fahrzeugsitz ein Mittel, beispielsweise einen Hebel auf, das den Verriegelungsmechanismus für die Komfortverstellung der Rückenlehne entriegelt.

Das Dokument DE 10 2007 005893 A1 offenbart einen Sitz mit allen Merkmalen des Oberbegriffs des unabhängigen Anspruchs 1.

Im Folgenden wird die Erfindung anhand der Figuren 1 bis 7 erläutert. Diese Erläuterungen sind lediglich beispielhaft und schränken den allgemeinen Erfindungsgedanken nicht ein. Die Erläuterungen gelten für alle Gegenstände der vorliegenden Erfindung gleichermaßen.
**Figur 1** zeigt die Memory-Vorrichtung.
**Figur 2** zeigt eine Explosionszeichnung der Memory-Vorrichtung.
**Figur 3** zeigt die Funktionsweise der Memory-Vorrichtung.
**Figur 4** zeigt den erfindungsgemäßen Fahrzeugsitz bei der Verstellung in die Easy-Entry-Stellung.
**Figur 5** zeigt die Funktion der Memory-Vorrichtung bei der Verstellung in die Easy-Entry-Stellung.
**Figur 6** zeigt den erfindungsgemäßen Fahrzeugsitz.
**Figur 7** zeigt den Bowden-Zug zur Verstellung der Rückenlehne in die Easy-Entry-Stellung.

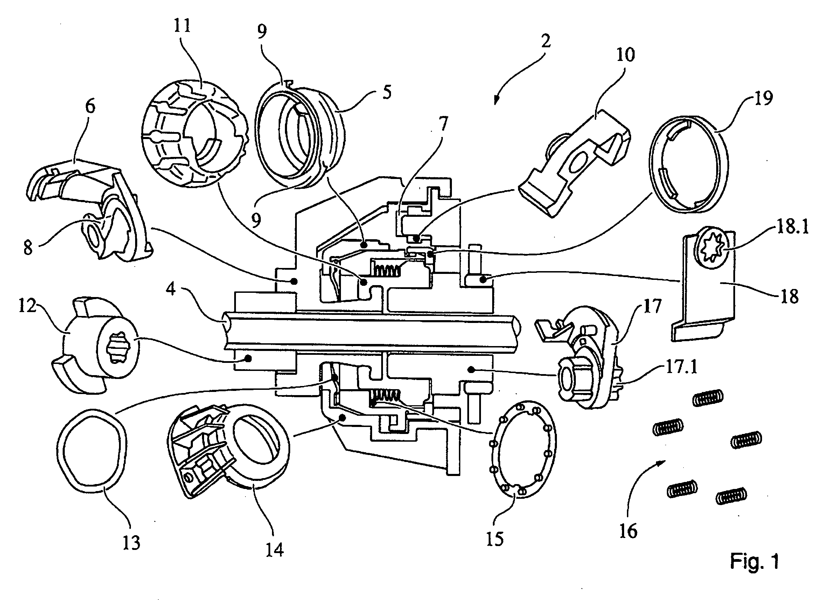

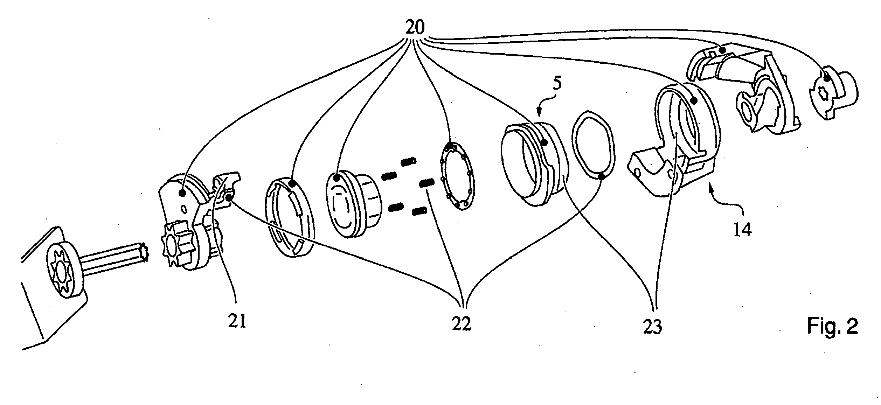

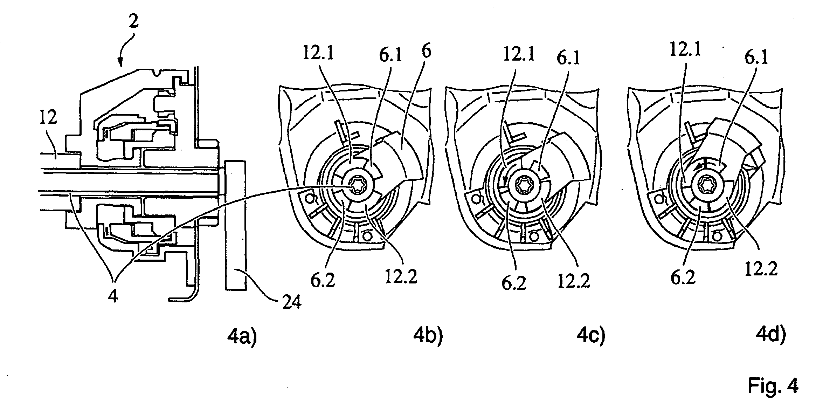

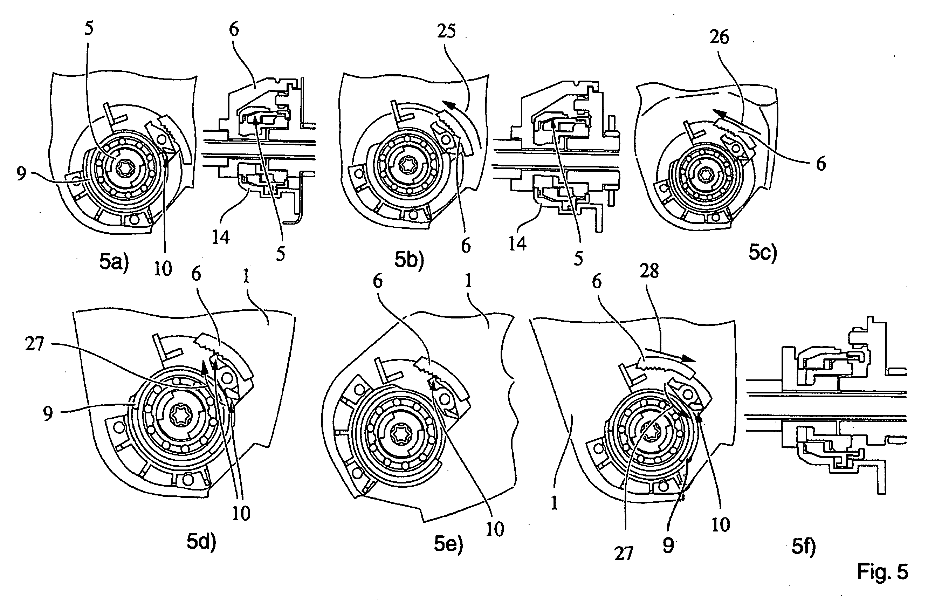

**Figur 1** zeigt die Memory-Vorrichtung 2, die einen Entriegelungshebel 6 aufweist, der um die Übertragungswelle 4 drehbar vorgesehen ist, jedoch mit dieser nicht drehsicher verbunden ist. Dieser Entriegelungshebel 6 wird, beispielsweise von einem Bowden-Zug, drehend angetrieben, wenn die Rückenlehne von ihrer Gebrauchs- in eine Easy-Entry-Stellung verbracht werden soll. Der Entriegelungshebel 6 weist in dem Abschnitt, der sich um die Übertragungswelle 4 erstreckt, ein Gewinde 8, insbesondere ein sehr steiles Gewinde auf. Die Flanken dieses Gewindes wirken mit einer Betätigungsbuchse 11 zusammen und verschieben diese rein translatorisch, d.h. linear. Dabei wird eine Kupplung 5 mitgenommen, d.h. auch rein axial verschoben und in kraft-, form- und/oder reibschlüssigen Eingriff mit einem Gehäuse 14, das drehfest mit der Rückenlehne verbunden ist, gebracht. Zwischen der Betätigungsbuchse 11 und der Kupplung 5 ist ein Federmittel 16 hier mehrere Spiralfedern und zwischen dem Gehäuse 14 und der Kupplung 5 ein Federmittel hier ein Wellenring 13 vorgesehen. Der Wellenring unterstützt die Bewegung der Kupplung 5 von dem Gehäuse 14 weg, d.h. wenn die Rückenlehne von der Easy-Entry-Stellung wieder in die Gebrauchsstellung zurückgedreht wird. Die Federmittel 16 dienen hauptsächlich dem Toleranzausgleich. An der Kupplung 5 ist ein Steuerelement 9, hier eine Nocke, vorgesehen, die wie insbesondere in Figur 5 zu sehen ist, eine Klinke 10 antreibt, die verriegelnd mit dem Entriegelungshebel 6 zusammenwirken kann. An der Klinke 10 ist ein Federmittel 7 vorgesehen, das die Klinke in eine Drehrichtung, hier im Uhrzeigersinn, vorspannt. Desweiteren weist die Memory-Vorrichtung eine Buchse 17 auf, die drehfest mittels des Befestigungsmittels 18 mit dem Sitzteil des erfindungsgemäßen Fahrzeugsitzes verbunden ist. Diese Buchse dient als Axiallager und Verdrehsicherung für die Betätigungsbuchse 11 sowie als Rotationslager für die Klinke 10. Um sicherzustellen, dass der Form-, Kraft- und/oder Reibschluss zwischen dem Gehäuse 14 und der Kupplung 5 aufgehoben wird, sobald sich der Entriegelungshebel 6 nicht mehr in seiner entriegelnden Stellung befindet, weist die Memory-Vorrichtung einen Mitnehmer 19 auf, der mit der Betätigungsbuchse (II) verbunden ist und eine im Wesentlichen gleichförmige Rückwärtsbewegung zwischen der Betätigungsbuchse 11 und der Kupplung 5 sicherstellt. Desweiteren weist der erfindungsgemäße Fahrzeugsitz eine Übertragungswelle 4 auf, die zwischen den beiden Seitenwänden der Rückenlehne vorgesetzt ist. An ihrem einen Ende weist die Übertragungswelle wie in Figur 4 dargestellt einen Betätigungshebel 24 auf, der, sobald er betätigt wird ein Drehmoment auf die Übertragungswelle 4 ausübt, wodurch der Verriegelungsmechanismus entriegelt wird. Drehfest mit dieser Übertragungswelle 4 ist ein Antriebsmittel 12 vorgesehen, das bei einer Verstellung der Rückenlehne von der Gebrauchs- in die Easy-Entry-Stellung von dem Entriegelungshebel 6 angetrieben wird und dadurch ein Drehmoment auf die Übertragungswelle 4 überträgt, wodurch ebenfalls der Entriegelungsmechanismus 3 entriegelt wird. Der Gleitring 15 dient im Wesentlichen zur Lagerung der Federmittel 16 und/oder als Reibfläche zu Kupplung 5. Die Memory-Vorrichtung 2 baut sehr kompakt und kann beispielsweise, wie in Figur 2 dargestellt im Wesentlichen aus Kunststoffteilen 20 hergestellt werden, weil die auftretenden Kräfte und Momente durch die kompakte Bauweise im Wesentlichen sehr gering sind. Wie ebenfalls Figur 2 entnommen werden kann ist ein Reibschluss zwischen der Kupplung 5 und dem Gehäuse 14 bevorzugt. Deshalb sind die Flächen 23 vorzugsweise mit einem hohen Reibkoeffizient vorgesehen.

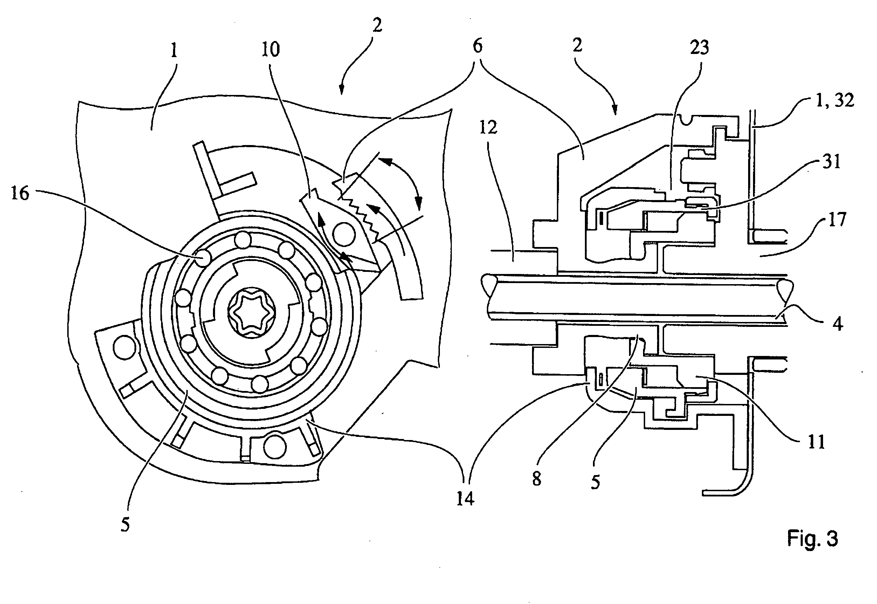

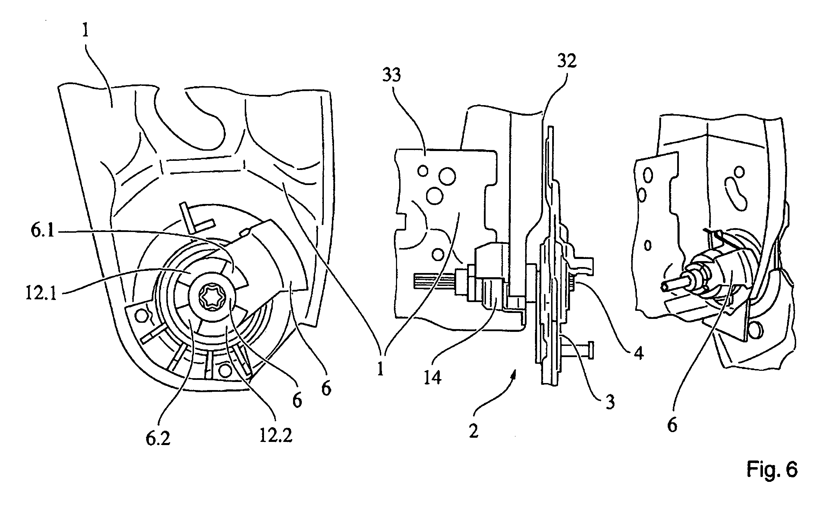

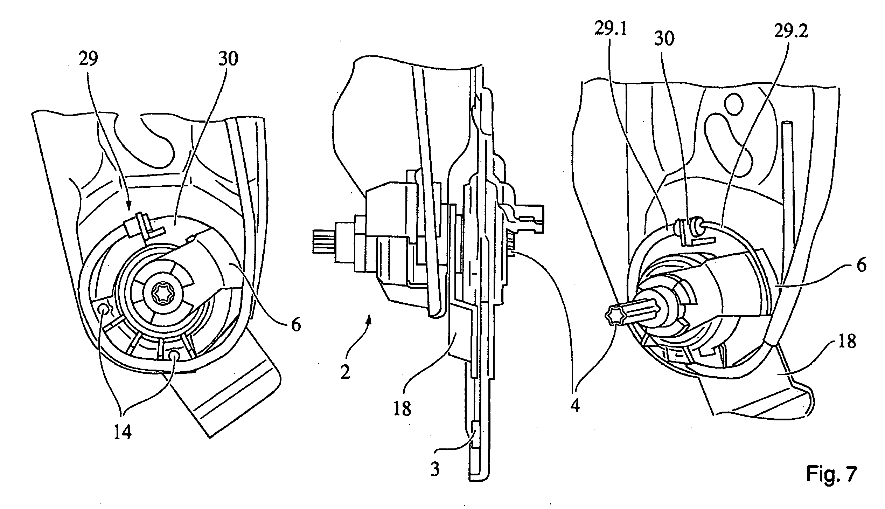

**Figur 3** zeigt noch einmal die Funktionsweise der Memory-Vorrichtung 2. Diese ist zwischen den Seitenwänden der Rückenlehne 1 vorgesehen, d.h. eine Seitenwand 32 der Rückenlehne 1 befindet sich zwischen der Vorrichtung 2 und dem Verriegelungsmechanismus 3, was insbesondere in den Figuren 6 und 7 zu erkennen ist. Solange der Betätigungshebel 6 nicht betätigt ist, kann sich die Übertragungswelle 4 und damit auch das Antriebsmittel 12 drehen, ohne dass sich der Entriegelungshebel 6 oder ein anderes Teil der Memory-Vorrichtung 2 dreht. Die Klinke 10, die wie durch den Doppelpfeil im linken Teil der Figur 3 dargestellt, drehbar um einen Lagerzapfen angeordnet ist, wird durch die Steuerkurve 9 in einer Stellung gehalten, in der sie nicht im Eingriff mit dem Entriegelungshebel 6 ist. Wird jedoch der Entriegelungshebel 6 wie durch den Pfeil im linken Teil der Figur 3 dargestellt gedreht, wird, wie durch den Doppelpfeil 31 dargestellt, die Betätigungsbuchse 11 axial verschoben und nimmt dabei die Kupplung 5 mit, was durch den in der Kupplung vorgesehenen Doppelpfeil dargestellt ist. Sobald sich die Kupplung im Form-, Kraft- und/oder Reibschluss mit dem Gehäuse 14 befindet, macht sie deren Drehbewegung und damit die Bewegung der Rückenlehne von der Gebrauchs- in die Easy-Entry-Stellung mit, was ebenfalls durch einen weiteren Doppelpfeil in der Kupplung 5 dargestellt ist. Sobald die Rückenlehne von der Easy-Entry-Stellung in die Gebrauchsstellung zurück gedreht wird, wird die Kupplung 5 wieder von dem Gehäuse weggezogen und der Form-, Kraft- und/oder Reibschluss zwischen den beiden Elementen 5, 14 wird wieder aufgehoben.

**Figuren 4a - 4c** zeigen die Vorrichtung 2 während der Komfortverstellung der Rückenlehne. Insbesondere den Figuren 4b - 4d kann entnommen werden, dass der Entriegelungshebel 6 zwei Formschlusssegmente 6.1, 6.2 und das Antriebsmittel 12 zwei Formschlusssegmente 12.1, 12.2 aufweist. Wird nun der Betätigungshebel 24 betätigt, dreht sich die Übertragungswelle 4, wodurch der Verriegelungsmechanismus 3 (nicht dargestellt) entriegelt wird. Der Sitzinsasse kann jetzt die frei drehende Rückenlehne, beispielsweise durch Druck mit seinem Rücken oder Zug mit der Hand oder durch ein Federsystem, in eine ihm angenehme Komfortposition bringen. Bei dieser Drehbewegung geraten, wie insbesondere in Figur 4c ersichtlich ist, die Anlageflächen der Segmente 12.1, 12.2 nicht in Eingriff mit den Segmenten 6.1, 6.2, d. h. es wird von dem Antriebsmittel 12 kein Drehmoment auf den Entriegelungshebel 6 übertragen. Sobald die Komforteinstellung erfolgt ist, lässt der Sitzinsasse den Hebel 24 los und der Verriegelungsmechanismus verriegelt wieder. Die Memory-Vorrichtung 2 bleibt folglich bei einer durch den Hebel 24 ausgelösten Entriegelung unbeeinflusst. Wird hingegen die Rückenlehne von ihrer Gebrauchs- in die Easy-Entry-Stellung verbracht, was in Figur 4d dargestellt ist, geraten die Segmente 6.1 und 6.2 in Eingriff mit den Segmenten 12.1, 12.2, wodurch ein Drehmoment von dem Entriegelungshebel 6 auf das Antriebsmittel 12 übertragen wird und dieses drehend antreibt. Diese Drehbewegung wird wiederrum auf die Übertragungswelle 4 übertragen, die den Verriegelungsmechanismus 3 entriegelt. Dadurch erfolgt die Entriegelung des Verriegelungsmechanismus zur Verstellung der Rückenlehne von der Gebrauchs- in die Easy-Entry-Stellung.

**Figur 5** zeigt die Memory-Vorrichtung 2 bei der Verdrehung der Rückenlehne aus der Gebrauchs- in die Easy-Entry-Stellung. Bei der Darstellung gemäß Figur 5a befindet sich die Kupplung 5 noch nicht im Eingriff mit dem Gehäuse 14. Bei der Darstellung gemäß Figur 5b wurde wie durch den Pfeil 25 dargestellt der Entriegelungshebel 6 gegen den Uhrzeigersinn so weit verdreht, dass die Kupplung 5 sich im Kraft-, Form- und/oder Reibschluss mit dem Gehäuse 14 verbindet. Dadurch wird die momentane Stellung der Rückenlehne erfasst, in der die Rückenlehne, aus der Easy-Entry-Stellung kommend, wieder verriegelt werden soll. Der Entriegelungshebel 6 wurde dafür ungefähr um 10° verdreht. Wird der Entriegelungshebel 6, wie in Figur 5c dargestellt, weiter gegen den Uhrzeigersinn verdreht, beispielsweise um 20°, erfolgt die Entriegelung des Verriegelungsmechanismus 3 (nicht dargestellt). Die Rückenlehne kann jetzt von ihrer eingestellten Gebrauchs- in die Easy-Entry-Stellung verdreht werden. Dies ist in Figur 5d dargestellt. Sobald die Rückenlehne um ein kleines Winkelsegment, beispielsweise 4°, hier im Uhrzeigersinn, verdreht wird, gerät die Klinke 10 außer Eingriff mit der Steuernocke 9 und dreht sich, angetrieben durch ein Federmittel 7 im Uhrzeigersinn wie durch den Pfeil 27 dargestellt. Dadurch gerät die Klinke mit ihrem linken Ende in Form- und/oder Kraftschluss mit dem Entriegelungshebel 6 und verhindert dadurch, dass sich dieser von seiner hier dargestellten entriegelnden Stellung in die verriegelnde Stellung (vgl. Figur 5a) zurückdreht. Dadurch wird der Verriegelungsmechanismus 3 in seiner entriegelten Stellung gehalten und die Rückenlehne kann wie in Figur 5e dargestellt frei drehen und in ihre Easy-Entry-Position verbracht werden. Wird die Rückenlehne aus der Easy-Entry-Position (Figur 5e) in die Gebrauchsposition zurückgedreht, was in Figur 5f dargestellt ist, gerät die Steuerkurve 9 bei erreichen der gewünschten Stellung der Rückenlehne wieder in Eingriff mit dem rechten Teil der Klinke 10 und dreht diese wie wiederrum durch den Pfeil 27 dargestellt gegen den Uhrzeigersinn. Dadurch gerät die Klinke 10 außer Eingriff mit dem Entriegelungshebel 6 und dieser kann sich wie durch den Pfeil 28 dargestellt in seine verriegelnde Stellung, im Uhrzeigersinn, zurückdrehen. Die Rückenlehne befindet sich exakt in derselben Gebrauchsstellung wie ursprünglich, d.h. vor der Easy-Entry-Verstellung.

**Figur 6** zeigt den erfindungsgemäßen Fahrzeugsitz insbesondere dessen Rückenlehne. Diese weist links der Seitenwand 32 die Memory-Vorrichtung 2 und rechts der Seitenwand 32 den Verriegelungsmechanismus 3 auf. Es ist deutlich zu erkennen, dass die Memory-Vorrichtung 2 und der Verriegelungsmechanismus 3 koaxial entlang der Übertragungswelle 4 vorgesehen sind. Dadurch, dass sich die Vorrichtung 2 innerhalb der Seitenwände der Rückenlehne und der Recliner außerhalb der Seitenwände der Rückenlehne befindet, ist der erfindungsgemäße Fahrzeugsitz sehr kompakt. Die beiden Seitenwände des Rahmens der Rückenlehne werden durch Querverbinder 33 miteinander verbunden, wobei hier nur der untere Querverbinder dargestellt ist.

In **Figur 7** ist der Auslösemechanismus für die Verbringung der Rückenlehne aus der Gebrauchs- in die Easy-Entry-Stellung dargestellt. Diese erfolgt durch einen Bowden-Zug 29, dessen eines Ende (nicht dargestellt) beispielsweise mit einem Druckschalter verbunden ist. Die Hülse 29.1 des Bowden-Zuges ist an einer Halterung 30, die fest mit der Rückenlehne verbunden ist, angebracht. Die Seele 29.2 ist mit dem Entriegelungshebel 6 verbunden und treibt diesen rotierend an.

### Bezugszeichenliste:

- 1: Rückenlehne
- 2: Vorrichtung, Memory-Vorrichtung
- 3: Verriegelungsmechanismus
- 4: Übertragungswelle
- 5: Kupplung
- 6: Entriegelungsmittel, Entreigelungshebel
- 6.1: erstes Formschlusssegment
- 6.2: zweites Formschlusssegment
- 7: Federmittel
- 8: Gewinde
- 9: Steuerelement
- 10: Mittel, Klinke
- 11: Mittel, Betätigungsbuchse
- 12: Antriebsmittel
- 12.1: erstes Formschlusssegment
- 12.2: zweites Formschlusssegment
- 13: Federmittel, Wellenring
- 14: Gehäuse
- 15: Gleitring
- 16: Federmittel, Spiralfeder(n)
- 17: Buchse, mit dem Sitzteil verbundene Buchse
- 17.1: Formschlussmittel, Zähne
- 18: Befestigungsmittel, vorgesehen an dem Sitzteil
- 18.1: Formschlussmittel, zahnförmige Einbuchtung
- 19: Mitnehmer
- 20: Kunststoffteile
- 21: Kunststoff- oder Metallteil
- 22: Federmittel
- 23: Oberfläche, mit vorzugsweise erhöhtem Reibkoeffizient
- 24: Betätigungsmittel, Hebel
- 25: Pfeil
- 26: Pfeil
- 27: Pfeil
- 28: Pfeil
- 29: Bowden-Zug
- 29.1: Hülse
- 29.2: Seele
- 30: Halterung für die Hülse des Bowden-Zuges
- 31: Doppelpfeil
- 32: Seitenwand der Rückenlehne
- 33: untere Querverbindung zwischen den beiden Seitenwänden der Rückenlehne

## Patentansprüche

1. Fahrzeugsitz mit einem Sitzteil und einer Rückenlehne (1), die in der Gebrauchsstellung der Rückenlehne zu Komfortzwecken und für einen vereinfachten Zugang zu den rückwärtigen Sitzen relativ zu dem Sitzteil aus der Gebrauchs- in eine Easy-Entry-Stellung verdrehbar ist, die einen Verriegelungsmechanismus (3) aufweist, der die Rückenlehne in der gewünschten Gebrauchsstellung verriegelt und die mit einer Vorrichtung (2) versehen ist, die mit dem Verriegelungsmechanismus (3) zusammenwirkt und die Rückenlehne, aus der Easy-Entry-Stellung kommend, automatisch in der ursprünglichen, gewünschten Gebrauchsstellung verriegelt, wobei die Vorrichtung (2) und die Verriegelungsmechanismus koaxial vorgesehen sind, wobei die Vorrichtung (2) ein Mittel (7, 8) aufweist, das bei der Verstellung der Rückenlehne (1) aus der Gebrauchs- in die Easy-Entry-Stellung eine Rotationsbewegung in eine reine Translationsbewegung umwandelt, wobei die Vorrichtung (2) eine linear verstellbare Kupplung (5) und ein Entriegelungsmittel (6) aufweist, das gedreht wird,
wobei das Entriegelungsmittel (6) ein Entriegelungshebel (6) ist,
der die Kupplung (5) linear antreibt,
wobei der Entriegelungshebel (6) die Kupplung (5) mit der Rückenlehne, vor deren Verstellung in die Easy-Entry-Stellung, direkt oder indirekt in einen reibschlüssigen Kontakt bringt, **dadurch gekennzeichnet, dass**
die Kupplung (5) ein Steuerelement (9) aufweist,
das mit einem Mittel (10) zusammenwirkt, das den Entriegelungshebel (6) in seiner entriegelnden Stellung hält,
wobei das Steuerelement (9) eine Nocke und das Mittel (10) eine Rastklinke ist.

2. Fahrzeugsitz nach Anspruch 1, **dadurch gekennzeichnet, dass** der Entriegelungshebel (6) die Übertragungswelle (4) rotativ antreibt, die den Verriegelungsmechanismus für die Easy-Entry-Verstellung der Rückenlehne entriegelt.

3. Fahrzeugsitz nach Anspruch 1 oder 2, **dadurch gekennzeichnet, dass** er ein Mittel (24) aufweist, das den Verriegelungsmechanismus (3) für die Komfortverstellung der Rückenlehne entriegelt.

## Claims

1. Vehicle seat with a seat part and a backrest (1) which, in the use position of the backrest, can be rotated relative to the seat part, from the use position into an easy entry position, for comfort purposes and for simplified access to the rear seats, the backrest having a locking mechanism (3) which locks the backrest in the desired use position, and the backrest being provided with a device (2) which interacts with the locking mechanism (3) and locks the backrest, coming from the easy entry position, automatically in the original, desired use position, wherein the device (2) and the locking mechanism are provided coaxially, wherein the device (2) has a means (7, 8) which, on the adjustment of the backrest (1) from the use position into the easy entry position, converts a rotational movement into a pure translational movement, wherein the device (2) has a linearly adjustable coupling (5) and an unlocking means (6) which is rotated, wherein the unlocking means (6) is an unlocking lever (6) which drives the coupling (5) linearly, wherein the unlocking lever (6) brings the coupling (5) directly or indirectly into a frictional contact with the backrest, before adjustment of the latter into the easy entry position, **characterized in that** the coupling (5) has a control element (9) which interacts with a means (10) which keeps the unlocking lever (6) in the unlocking position thereof, wherein the control element (9) is a cam and the means (10) is a latching pawl.

2. Vehicle seat according to Claim 1, **characterized in that** the unlocking lever (6) rotatively drives the transmission shaft (4) which unlocks the locking mechanism for the easy entry adjustment of the backrest.

3. Vehicle seat according to Claim 1 or 2, **characterized in that** it has a means (24) which unlocks the locking mechanism (3) for the comfort adjustment of the backrest.

## Revendications

1. Siège de véhicule automobile comportant une partie de siège et un dossier de siège (1), qui dans la position d'utilisation du dossier de siège dans un objectif de confort et pour un accès simplifié au siège arrière peut être tourné par rapport à la partie de siège à partir de la position d'utilisation dans une position easy entry, qui présente un mécanisme de verrouillage (3), qui verrouille le dossier de siège dans la position d'utilisation souhaitée et qui est pourvu d'un dispositif (2), qui coopère avec le mécanisme de verrouillage (3) et verrouille le dossier de siège à partir de la position easy entry, automatiquement dans la position d'utilisation d'origine souhaitée, dans lequel le dispositif (2) et le mécanisme de verrouillage sont prévus coaxialement, dans lequel le dispositif (2) présente un moyen (7, 8), qui lors du réglage du dossier de siège (1) de la position d'utilisation à la position easy entry convertit un mouvement de rotation en un mouvement de translation pur, dans lequel le dispositif (2) présente un accouplement réglable linéairement (5) et un moyen de déverrouillage (6), qui est tourné en rotation, dans lequel le moyen de déverrouillage (6) est un levier de déverrouillage (6), qui entraîne linéairement l'accouplement (5), dans lequel le levier de verrouillage (6) met en contact par friction directement ou indirectement l'accouplement (5) avec le dossier de siège, avant le réglage de ce dernier dans la position easy entry, **caractérisé en ce que** l'accouplement (5) présente un élément de commande (9), qui coopère avec un moyen (10), qui maintient le levier de déverrouillage (6) dans sa position déverrouillée, dans lequel l'élément de commande (9) est une came et le moyen (10) est un cliquet de verrouillage.

2. Siège de véhicule selon la revendication 1, **caractérisé en ce que** le levier de déverrouillage (6) entraîne rotativement l'arbre de transmission (4), qui déverrouille le mécanisme de verrouillage pour le réglage en position easy entry du dossier de siège.

3. Siège de véhicule selon la revendication 1 ou 2, **caractérisé en ce qu'**il présente un moyen (24), qui déverrouille le mécanisme de verrouillage (3) en vue du réglage confortable du dossier de siège.
